# EUROPEAN PATENT SPECIFICATION

(11) **EP 3 047 724 B1**
(45) Date of publication and mention of the grant of the patent: **28.06.2017**
(21) Application number: 15386001.0
(22) Date of filing: 23.01.2015
(51) Int. Cl.: A01G 13/00, A01G 13/02

(54) **Plastic film for agricultural cultivations with weight entrapping pockets**
Kunststofffolie für landwirtschaftlichen Anbau mit Gewichtseinschlusstaschen
Film plastique pour cultures agricoles avec poches de piégeage de poids

(43) Date of publication of application: 27.07.2016
(73) Proprietor: Daios, Asterios D., 592 00 Naousa (GR)
(72) Inventor: Daios, Asterios D., 592 00 Naousa (GR)
(74) Representative: Argyriadis, Korinna

(56) References cited:
- EP-A1- 2 071 939
- WO-A1-00/62597
- WO-A1-98/30082
- WO-A1-2005/022984
- FR-A1- 2 501 955

## Description

The invention refers to a plastic film with weight entrapping pockets that can be employed for agricultural cultivations such as for example low tunnels or linear cultivations. Each side lengthways bears consecutive pockets that have been formed from the same plastic film. The consecutive pockets are filled with weight when the plastic film is employed- commonly soil or sand - so that the plastic film is kept steadily over cultivation line. Every pocket has been formed in such a manner so that soil or sand can be readily inserted through the weight insertion opening and once inserted it is entrapped so that the loss of weight from the pockets is averted over the course of use of the plastic film.

Cultivating in low tunnels or ridges in the case of linear cultivations is an established method and it has been developed extensively over the last decades. The state of the art comprises plastic films bearing weight insertion pockets along both lengthways sides of the plastic film.

Most commonly, said films are formed by folding the lengthways sides and creating consecutive pockets on the folded parts of the plastic film, that are filled with weight when the film is employed. Filling the pockets is achieved though the opening of every pocket. With the state of the art it is widely observed that there is gradual weight loss from the pockets through the openings of said pockets.

As a consequence in periods with strong winds, it leads to the uncovering of the cultivation line which results to temperature loss and finally to drastic reduction of the yield as well as to quality degradation of the crop. To avoid the latter the pockets need to be refilled over the course of use of the plastic film either in the same cultivating period or at a later stage over the lifespan of the plastic film with as much soil or sand as it has been lost.

This process has to take place several times in the same cultivating period periods when there is lack of labour forces, which in fact increases further the cost of refilling and at the end, the cultivating costs.

Several solutions have been suggested by the same inventor as well as others in the past aiming at reducing the cost of filling the pockets by employing soil, water or a combination thereof as weight.

With the inventions DE29500393U1 and DE29707670U1 two solutions for the formation of weight insertion pockets have been suggested. In both cases the weight loss during the use of the plastic film has been significant and inevitable leading to the need to refill the pockets and consequently increasing the operational costs.

With the invention GR 1002872 (B) the formation of pockets has been suggested in such a manner as to form, from the same plastic film, a feeding tube and numerous independent water pockets, that are filled through said feeding tube.

With the invention GR 2000100385 (A) the insertion of independent water tubes in the pockets along its lengthways sides has been suggested.

The invention WO 0062597 (A1) combines the formation of water pockets with soil pockets. These solutions demand the installation and use of a water supply so that the pockets can be readily filled, which in fact is not feasible in all cases, but rather in a small set of fields.

With the invention WO 2004019674 (A1) there has been an effort to reduce the cost of filling the pockets by forming the pockets in such a manner so that the insertion of soil and rain water is facilitated. The loss of weight in this case is inevitable.

A further invention is EP 2071939 (A1) which features alternating soil and water pockets employing rain water as weight. It poses an improvement of the aforementioned solutions however the loss of weight from the pockets is inevitable.

The invention GR 20030100373 (A) has suggested a further solution by folding the sides of the film two consecutive times forming a weight insertion pocket that bears a lip which hinders the exit of weight from the pocket. While the loss of weight is reduced, refilling the pocket is still a need and consequently the operational cost is marginally improved over the lifespan of the plastic film.

Hence there is the need to manufacture a plastic film with weight insertion pockets along its lengthways sides that would be formed in such a manner so that it would be readily filled (with soil or sand) in the pockets, while the exit of the sand or soil from the pocket would be averted or hindered when the film is being used.

In such a design of the weight pockets the pockets would have to be filled with weight once, when the film is used for the first time, while entrapping said weight for as long as the film is being used for.

The current invention according to claim 1, suggests a new plastic film (1) with weight entrapping pockets (2) along the lengthways sides of the film that are capable of holding weight (8) - soil or sand - that is inserted in them when the film is used for the first time while refilling said pockets is averted.

This is achieved by designing the weight insertion openings (7) at every pocket in such a fashion so as to facilitate weight insertion however in parallel to avert the exit of said weight.

Below follows an invention description with reference to the following figures:
Figure 1: Plastic film for agricultural cultivations with weight entrapping pockets (1) placed on a low tunnel and a detail of half a pocket (2) in section.
Figure 2: Schematic representation in section A-A of the weight entrapment in the pocket (2)
   A-A.1 pocket (2) without any weight
   A-A.2 filing the pocket (2) with sand or soil (8) through the weight insertion A-A.3 distribution of the weight (8) in the pocket (2)
   A-A.4 wrinkling of the patch (6) while the weight is moved in the pocket (2) and closing the weight insertion opening (7) of said pocket (2)

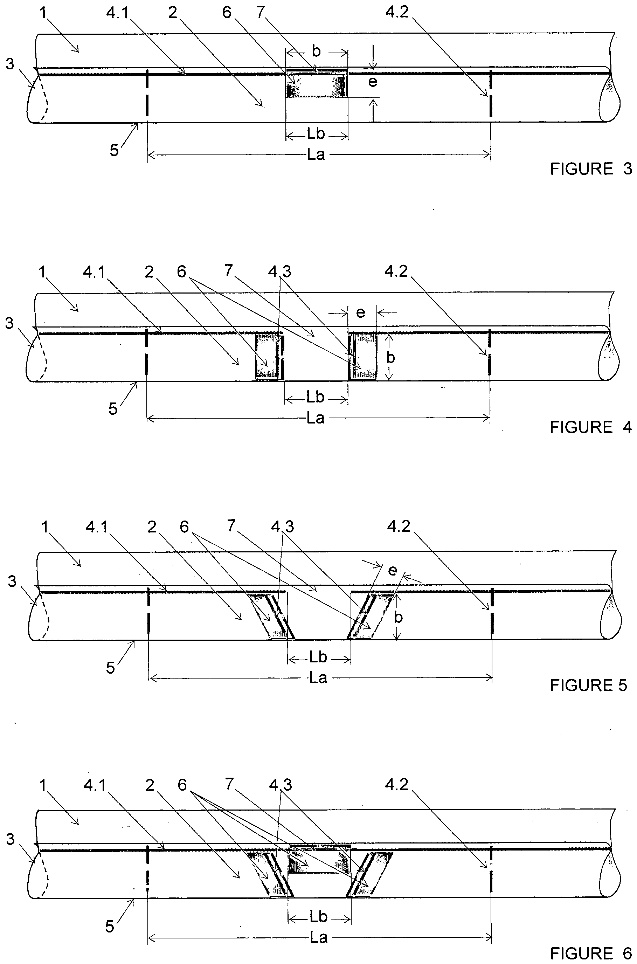

Figures 3 to 6: Front view of the several positions of the patch (6) in relation to the weight insertion opening (7) of the pocket (2).

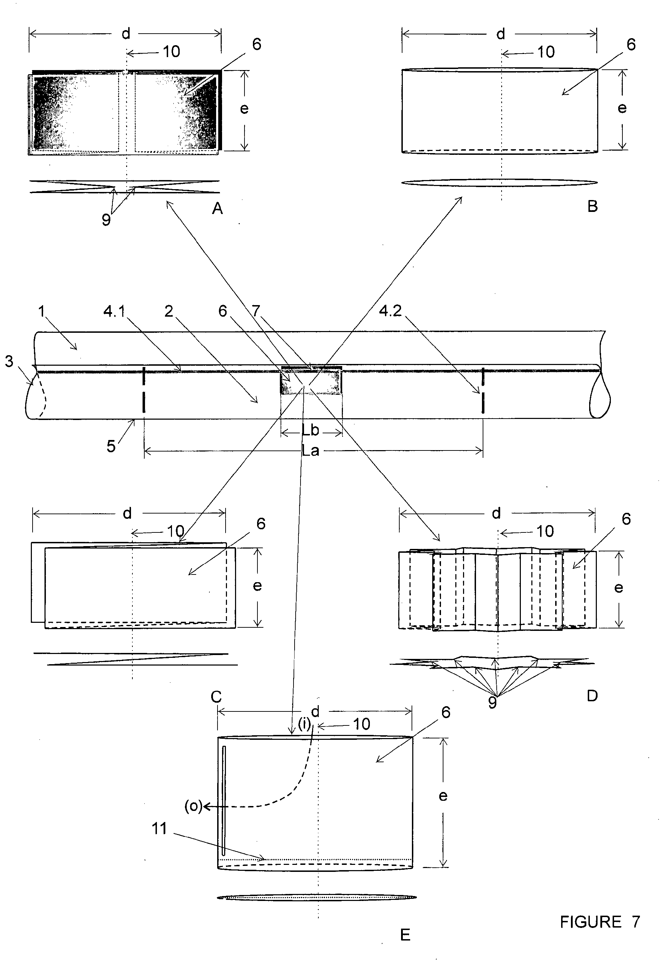

Figure 7: Front views and cross-sections of several types of patches(6)
   7.A flattened cylinder with creases (9) in the form of gussets
   7.B flattened cylinder
   7.C Z-folded
   7.D flattened tube with multiple creases (9)
   7.E flattened tube with sideways exits (o) and closed with a weld (11) at the bottom of the patch (6)

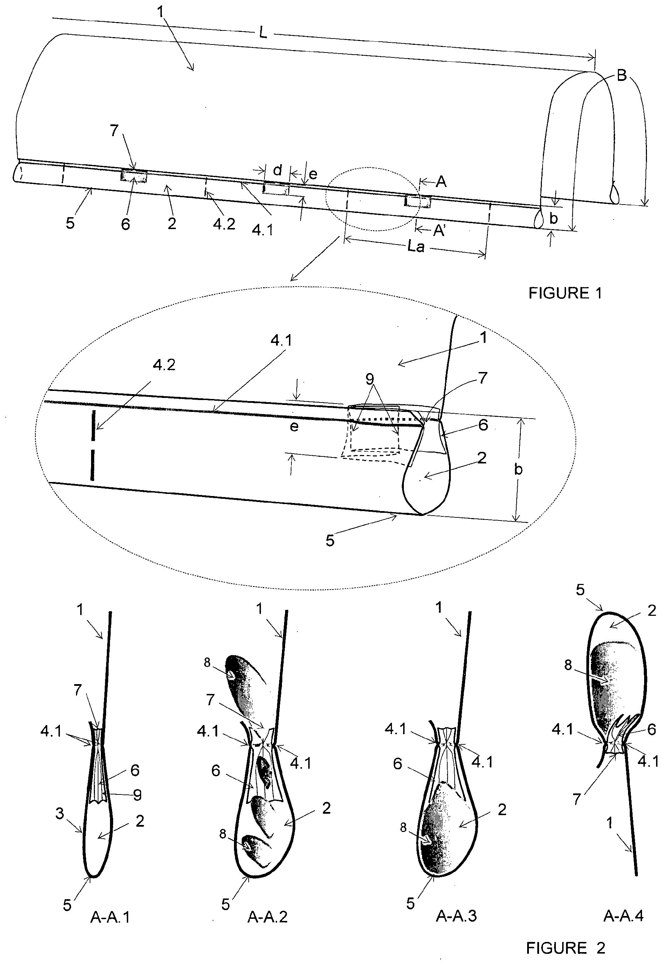

According to the main method of materializing the invention (Figure 1) a plastic film(1) is produced, employing a polyolefin (LDPE, LLDPE, EVA etc.) or a combination thereof.

The plastic film can be of any length (L) and width (B+2b), produced employing any known process such as blown or cast film extrusion as monolayer or multilayer and it could incorporate any additives so that it exhibits the desired thermal, optical and mechanical properties.

The lengthways sides (3) are then folded to width (b) up to 20cm and preferably 5-15cm so that the film has width (B).

The folded sides (3) are welded with weldings (4.1) and (4.2) of any form or shape so that every lengthways side bears consecutive weight insertion pockets (2) of length (La). Every such pocket (2) is defined by the crease of each fold (5) and the weldings (4.1-4.2) and has one or several weight insertion openings (7) at any position along the pocket.

Before, during or after the foldings (3) and the weldings (4) are performed so that consecutive weight insertion pockets (2) are formed, a patch (6) is inserted at every opening (7) of every weight insertion pocket (2) preferably produced from a different plastic film, that is welded with the inner walls of the plastic film (1) that define the opening (7) of every pocket (2).

The welding (4) - Figures 1 and 2 - is performed in such a manner that the outer walls of the patch (6) are welded with the inner walls of the plastic film(1) at the opening (7) of the pocket (2). The inner walls of the patch (6) are not welded. Hence the new soil or sand opening of each pocket (2) is defined by the outer boundaries of the inner walls of the patch (6). The length (e) of the patch (6) is preferably smaller of the width (b) of every pocket (2) and preferably approximately half of it (i.e. e= b/2) while its width (d) is equal or greater of the initial weight insertion opening (La).

Every patch (6) - Figure 7 - has an entry (i) and one or several exits (o) that can be parallel, perpendicular (Figure 7.E) or at an angle between or among them in relation to the main axis along its length (10) of the patch (6).

The patches (6) are produced at an earlier stage or simultaneously with the plastic film employing several methods such as blown or cast film extrusion or it could be a non-woven material or incorporating a material that absorbs water, and it could be of any shape - Figure 7- and preferably they have creases (9) preferably in the form of gussets (Figure 7.A) or Z-folded (Figure 7.C), or with multiple creases (Figure 7.D) that can be symmetrical or asymmetrical as to the main axis along its length (10). The patch (6) can be of a monolayer or multilayer structure with a total thickness from 5µm to 200µm and preferably 10-50µm and made of softer materials in relation to the main plastic film (1). In case the patch (6) is multilayered the distinct layers could be of the same material, different materials or a blend of different materials so that they exhibit different properties in the outer and inner surfaces. It could also comprise two or more separate plastic films superimposed and welded between them.

According to the preferred variant of the patch the combination of softer materials and lower thickness relative to the main plastic film as well as the existence of creases (9) assist during the use of the film to:
A) Fill the pocket (2) readily and in an unhindered fashion with soil or sand (8) as the lower part of the patch (6) opens due to the creases (9) (Figure 2 section A-A.2)
B) Hinder the exit of the soil or sand (8) from the pocket during the use of the film (Figure 2 section A-A.4)

During the use of the plastic film the grower fills every pocket with weight, commonly soil or sand (8) - Figure 2 section A-A.2 and detail of Figure 1 - through the opening (7) of every pocket. The opening is in this case formed though the inner surface of every patch (6).

Due to the creases (9) the patch (6) will open and the soil or sand will be distributed and moved in the inner part of the pocket (2).

Hence since the weight (8) will be in the inner part of the pocket (2) and consequently the outer surface of the patch (6) - Figure 2 section A-A.3 - it will exert pressure on the creases (9) of the soft patch (6) from the outer walls to the inner walls and consequently it will wrinkle the patch (6) towards the weight insertion opening (7) thus averting the exit of the soil - Figure 2 section A-A.4-.

If needed more soil or sand (8) can be inserted in the pocket (2) again through the opening (7) that is formed the inner part of the patch (6). The additional weight (8) will open the creases (9) again and will be distributed in the pocket (2).

However the additional weight will be entrapped in the pocket (2) due to the patch (6).

In the case that the patch (6) has creases (9) it is welded to the plastic film (1) in such a manner so that the creases (9) are welded among them at their outer walls at the upper part of the patch (6). Hence the opening at the upper part of the patch (6) is equal to (b) and at the lower part of the patch (6) is equal to (b) plus the total width of the creases. Hence when the creases are opened the total circumference at the lower part of the patch (6) - exit of the weight to the pocket - is greater than circumference of the upper part of the patch (6) - entry point of the weight - allowing and facilitating the movement of soil or sand (8) to the inner part of the pocket (2).

According to a second method of materializing the invention (Figures 4, 5 and 6) the patches (6) can be more than one per weight entrapping pocket and positioned perpendicular (Figure 4) or at an angle (Figure 5) relative to the lengthways main axis of the plastic film (1) or a combination thereof (Figure 6).

Finally according to the last method of materializing the invention that is less preferred, the patch (6) is comprised or incorporates a material that expands as it absorbs water. While filling the pocket the dry patch would leave the weight insertion opening open, while during its use the humidity of the entrapped weight as well as the ambient humidity will have been absorbed by the patch, expanding it thus blocking the exit of weight from the pocket (2).

## Claims

1. Plastic film for agricultural cultivations with weight entrapping pockets (1), of any length (L) and width (B) that bears along its both lengthways edges (3) consecutive weight pockets (2) - of any form and shape - that are formed by folding the lengthways edges (3) to width (b) and welding them to the main plastic film with weldings (4.1 -4.2 -4.3) of any form - linear or non-linear- that is **characterised by** the fact that
at every weight insertion opening (7) of every pocket (2) it bears a patch (6), preferably manufactured from a thinner and softer plastic film relative to the main plastic film (1), whose outer surface is welded to the inner surface of the pocket (2) at the point of the opening, preferably linearly, so that the weight insertion opening (7) is defined by the inner surface of the patch(6) that has the attribute to wrinkle during use so that it blocks the opening thus entrapping the weight in the pocket (2).

2. Plastic film for agricultural cultivations with weight entrapping pockets, according to claim 1, that is **characterised by** the fact that the patch (6) is in the form of a flattened tube and can have one or several creases (9) that are symmetrical or asymmetrical, linear or non-linear relative to the lengthways axis (10) of the patch (6).

3. Plastic film for agricultural cultivations with weight entrapping pockets, according to claim 1 and 2, that is **characterised by** the fact that the patches (6) can be positioned at the weight insertion openings (7) so that their lengthways axis (10) can be perpendicular, parallel or at an angle in reference to the lengthways axis of the plastic film (1).

4. Plastic film for agricultural cultivations with weight entrapping pockets, according to claim 1 to 3, that is **characterised by** the fact that, the entry (i) and exit (o) points of the patches (6) through which weight (8) is inserted in the weight entrapping pockets, are positioned parallel, perpendicular or at any angle between or among them in relation to the main axis of the patch (6).

5. Plastic film for agricultural cultivations with weight entrapping pockets, according to claim 1 to 4, that is **characterised by** the fact that the patch (6) can be manufactured from a multilayered plastic film exhibiting different attributes at every layer or from distinct superimposed films that are welded between or among them or from a non-woven material.

6. Plastic film for agricultural cultivations with weight entrapping pockets, according to claim 1 to 5, that is **characterised by** the fact that the patch (6) incorporates in its matrix a water absorbing material.

## Patentansprüche

1. Plastikfolie für landwirtschaftlichen Anbau mit Taschen zur Einschließung von Beschwerungsgut (1), mit beliebiger Länge (L) und Breite (B), die über beide Längsseiten (3) aufeinanderfolgende Taschen für Gewichte (2) aufweist - mit beliebiger Form - deren beide Längsseiten (3) zur Breite (B) hin gefaltet sind und zur Hauptplastikfolie mit Schweißungen (4.7 -4.2 -4.3) von beliebiger Form - linear oder nicht-linear - geschweißt sind, die durch die Tatsache gekennzeichnet ist, dass
jede Einwurföffnung (7) von jeder Tasche (2) mit einer Kappe (6) versehen ist, die bevorzugt aus einer dünneren und weicheren Plastikfolie als die Hauptfolie (1) hergestellt ist, deren Außenseite zur Innenseite der Tasche (2) am Öffnungsbereich geschweißt ist, bevorzugt linear, so dass die Einwurföffnung (7) von der Innenseite der Klappe (6) umgrenzt wird, die die Eigenschaft hat, bei Benutzung einzuknicken, so dass sie die Öffnung blockiert und folglich das Beschwerongsgut einschließt.

2. Plastikfolie für landwirtschaftlichen Anbau mit Taschen zur Einschließung von Beschwerungsgut, nach Anspruch 1, **gekennzeichnet dadurch, dass** die Klappe (6) die Form eines abgeflachten Schlauchs hat und eine oder mehrere Falten (9) haben kann, die symmetrisch oder asymmetrisch, linear oder nicht-linear in Bezug auf die Längsachsen (10) der Klappe (6) sind.

3. Plastikfolie für landwirtschaftlichen Anbau mit Taschen zur Einschließung von Beschwerungsgut, nach Ansprüchen 1 und 2, **gekennzeichnet dadurch, dass** die Klappen (6) an den Einwurföffnungen für Beschwerungsgut (7) so angebracht werden können, dass ihre Längsachsen (10) senkrecht, parallel oder in einem Winkel in Bezug auf die Längsachsen der Plastikfolie (1) sein können.

4. Plastikfolie für landwirtschaftlichen Anbau mit Taschen zur Einschließung von Beschwerungsgut, nach Ansprüchen 1 bis 3, **gekennzeichnet dadurch, dass** die Eingangs- (i) und Ausgangspunkte (o) der Klappen (6), durch die Beschwerungsgut (8) in die Einwurftaschen eingeführt wird, parallel, senkrecht oder in einem Winkel zwischen ihnen oder innerhalb ihrer in Bezug auf die Hauptachse der Kappe (6) angebracht sind.

5. Plastikfolie für landwirtschaftlichen Anbau mit Taschen zur Einschließung von Beschwerungsgut, nach Ansprüchen 1 bis 4, **gekennzeichnet dadurch, dass** die Klappe (6) aus einer mehrschichtigen Plastikfolie, die unterschiedliche Eigenschaften in jeder Schicht aufweist oder aus getrennten überlagerten Folien, die untereinander verschweißt sind oder aus Vliesmaterial hergestellt sein kann.

6. Plastikfolie für landwirtschaftlichen Anbau mit Taschen zur Einschließung von Beschwerungsgut, nach Ansprüchen 1 bis 5, **gekennzeichnet dadurch, dass** die Klappe (6) in ihrer Matrix wasserabsorbierendes Material enthält.

## Revendications

1. Film plastique destiné aux cultures agricoles équipé de poches de piégeage de poids (1), de n'importe quelle longueur (L) et largeur (B), qui porte le long de ses deux bords longitudinaux (3) des poches de poids consécutives (2), de n'importe quelle forme et apparence, qui sont formées en repliant les bords longitudinaux (3) sur la largeur (b) et en les soudant au film plastique principal l'aide de soudures (4.1- 4.2- 4.3) de n'importe quelle forme, linéaire ou non linéaire, **caractérisé en ce que**
il porte, à chaque ouverture d'insertion de poids (7) de chaque proche (2), une pièce (6) fabriquée de préférence à partir d'un film plastique plus fin et plus souple par rapport au film plastique principal (1) dont la surface externe est soudée à la surface interne de la poche (2) au point de l'ouverture, de préférence de manière linéaire, de sorte que l'ouverture d'insertion de poids (7) soit définie par la surface interne de la pièce (6) qui présente la particularité de se plisser à l'utilisation de façon à bloquer l'ouverture et piéger de ce fait le poids dans la poche (2).

2. Film plastique destiné aux cultures agricoles équipé de poches de piégeage de poids selon la revendication 1, caractérisé en que la pièce (6) se présente sous la forme d'un tube aplati et peut avoir un ou plusieurs plis (9) qui sont symétriques ou asymétriques, linéaires ou non linéaires par rapport à l'axe longitudinal (10) de la pièce (6).

3. Film plastique destiné aux cultures agricoles équipé de poches de piégeage de poids selon les revendications 1 et 2 **caractérisé en ce que** les pièces (6) peuvent être positionnées au niveau des ouvertures d'insertion de poids (7) de sorte que leurs axes longitudinaux (10) puissent être perpendiculaires, parallèles ou à un angle par rapport à l'axe longitudinal du film plastique (1).

4. Film plastique destiné aux cultures agricoles équipé de poches de piégeage de poids selon l'une quelconque des revendications 1 à 3, **caractérisé en ce que** les points d'entrée (i) et de sortie (o) des pièces (6) à travers lesquels est inséré le poids (8) dans les poches de piégeage de poids Sont Positionnés de manière parallèle, perpendiculaire ou selon un angle entre ou parmi eux par rapport à l'axe principal de la pièce (6).

5. Film plastique destiné aux cultures agricoles équipé de poches de piégeage de poids selon l'une quelconque des revendications 1 à 4, **caractérisé en ce que** la pièce (6) peut être fabriquée à partir d'un film plastique multicouches présentait des particularités différentes à chaque couche ou à partir de films distincts superposés qui sont soudés entre ou parmi eux ou à partir d'un matériau non tissé.

6. Film plastique destiné aux cultures agricoles équipé de poches de piégeage de poids selon l'une quelconque des revendications 1 à 5, **caractérisé en ce que** la pièce (6) incorpore dans sa matrice un matériau absorbant l'eau.
